# EUROPÄISCHE PATENTSCHRIFT

(11) **EP 3 372 884 B1**
(45) Veröffentlichungstag und Bekanntmachung des Hinweises auf die Patenterteilung: **11.01.2023**
(21) Anmeldenummer: 18160759.9
(22) Anmeldetag: 08.03.2018
(51) Int. Cl.: F16L 5/04, F16L 55/10, F16L 59/14

(54) **BRANDSCHUTZROHRANSCHLUSS**
FIRE PROTECTION PIPE CONNECTION
RACCORDEMENT DE TUYAUX SÉCURISÉ CONTRE L'INCENDIE

(30) Priorität: 08.03.2017 DE 102017104899
(43) Veröffentlichungstag der Anmeldung: 12.09.2018
(73) Patentinhaber: Düker GmbH, 97753 Karlstadt (DE)
(72) Erfinder: Jäger, Oliver, 89520 Heidenheim a.d. Brenz (DE); Amthor, Elfriede, 97753 Karlstadt (DE)
(74) Vertreter: Ullrich & Naumann PartG mbB

(56) Entgegenhaltungen:
- DE-A1- 1 957 106
- DE-A1- 10 349 494
- DE-A1-102006 057 550
- JP-A- 2008 106 936
- JP-A- 2008 121 413
- JP-A- 2008 215 037
- US-A1- 2015 140 243

## Beschreibung

Die Erfindung betrifft einen Brandschutzrohranschluss, umfassend ein Anschlussgehäuse aus Gusseisen, das mit mindestens einer einen Einstecckanal aufweisenden Steckmuffe zum Einstecken eines Spitzendes eines Rohres, insbesondere eines Rohres aus Gusseisen, versehen ist und ein in dem Anschlussgehäuse angeordnetes Intumeszenzmaterial.

Derartige Brandschutzrohranschlüsse sind bekannt. Dokument DE 10349494 A1 offenbart ein Brandschutzelement zur Durchführung von Rohrleitungen.

Bei diesen Brandschutzrohranschlüssen besteht stets das Problem, dass das Intumeszenzmaterial oft nicht rechtzeitig aktiviert wird, um den Brandschutzrohranschluss zu verschließen.

Unter Intumeszenzmaterial im Sinne der vorliegenden Erfindung ist dabei ein Material zu verstehen, das sich bei Hitzeeinwirkung aufbläht und eine derartige Volumenvergrößerung durchführt, dass dieses einen Innenraum des Brandschutzrohranschlusses verschließt und somit sicherstellt, dass keine heißen Gase durch diesen hindurchtreten können.

Der Erfindung liegt daher die Aufgabe zugrunde, einen Brandschutzrohranschluss der eingangs genannten Art derart zu verbessern, dass bei diesem ein möglichst rascher Verschluss seines Innenraums erfolgt.

Diese Aufgabe wird durch einen Brandschutzrohranschluss mit den Merkmalen von Anspruch 1 gelöst.

Vorzugsweise ist in dem Anschlussgehäuse auf den mindestens einen Einsteckkanal folgend ein Verbindungskanal ausgebildet und der Verbindungskanal durch eine an diesen unmittelbar angrenzende freiliegende Oberfläche des Intumeszenzmaterials begrenzt.

Der Vorteil dieser Lösung ist darin zu sehen, dass der Verbindungskanal nicht durch ein zusätzliches Element zwischen diesem und dem Intumeszenzmaterial gebildet ist, welches das den Brandschutzrohranschluss durchströmende Medium führt, sondern dass das Medium in dem Verbindungskanal durch die an diesen unmittelbar angrenzende freiliegende Oberfläche in direktem Kontakt mit dem Intumeszenzmaterials steht.

Dies hat den großen Vorteil, dass dadurch das Intumeszenzmaterial von den den Brandschutzrohranschluss im Brandfall durchströmenden heißen Gasen unmittelbar beaufschlagt wird und somit sehr schnell auf das Auftreten heißer Gase reagieren sich aufblähen und den Brandschutzrohranschluss verschließen kann.

Insbesondere ist es bei diesem Brandschutzrohranschluss nicht erforderlich, die zum Aufblähen des Intumeszenzmaterials führende Hitze über das Anschlussgehäuse des Brandschutzrohranschlusses in das Intumeszenzmaterial einzutragen.

Ein derartiger Brandschutzrohranschluss hat insbesondere auch den Vorteil, dass dieser vollständig in ein Gebäudeelement, beispielsweise eine Wand oder eine Decke unter Herstellung einer Verbindung mit der Wand oder Decke, insbesondere einer unmittelbaren flächigen Verbindung, beispielsweise durch Mörtel oder Beton, eingebaut werden kann, ohne dass die Brandschutzwirkung beeinträchtigt wird, da im Gegensatz zu den bekannten Brandschutzrohranschlüssen die den erfindungsgemäßen Brandschutzrohranschluss durchströmenden heißen Gase unmittelbar zur Aktivierung des Intumeszenzmaterials und somit zu dessen Aufblähen führen.

Besonders vorteilhaft ist es dabei, wenn die freiliegende Oberfläche durch eine Innenfläche mindestens eines Bogensegmentkörpers aus Intumeszenzmaterial gebildet ist.

Der Bogensegmentkörper kann dabei Bogensegmente umfassen, die sich über Winkelabstände von mehr als 30°, mehr als 50°, mehr als 80° oder mehr als 130° erstrecken.

Eine besonders günstige Lösung sieht vor, dass der Bogensegmentkörper die Form eines einseitig offenen Ringkörpers aufweist, so dass sich der Bogensegmentkörper insbesondere über ein Bogensegment von mindestens 160° erstreckt.

Hinsichtlich der Ausbildung des Bogensegmentkörpers sind die unterschiedlichsten Möglichkeiten denkbar.

So ist vorzugsweise vorgesehen, dass der Bogensegmentkörper eine Dicke in radialer Richtung zu einer Mittelachse aufweist, die mindestens ein Viertel, noch besser mindestens ein Fünftel, der parallel zu der Mittelachse des Einsteckkanals verlaufenden Breite des Bogensegmentkörpers beträgt.

Ferner könnte der Bogensegmentkörper als in sich steifer Körper ausgebildet sein.

Zum vorteilhaften Einbau des Bogensegmentkörpers in das Anschlussgehäuse ist vorzugsweise vorgesehen, dass der Bogensegmentkörper in radialer Richtung zur Mittelachse des Einsteckkanals federnd ausgebildet ist, so dass sich der Bogensegmentkörper zum Einbau derart deformieren lässt, dass dieser beispielsweise über den Einsteckkanal in das Anschlussgehäuse einsetzbar ist.

Zur Fixierung des Intumeszenzmaterials in dem Anschlussgehäuse werden die unterschiedlichsten Möglichkeiten denkbar.

Beispielsweise wären das Intumeszenzmaterial durchsetzende oder stoffschlüssig mit dem Anschlussgehäuse verbindende Lösungen denkbar.

Eine besonders günstige Lösung sieht jedoch vor, dass das Anschlussgehäuse eine zum Verbindungskanal hin offene Aufnahme für das Intumeszenzmaterial aufweist, so dass durch die Aufnahme das Intumeszenzmaterial in einfacher Weise innerhalb des Anschlussgehäuses platziert und gehalten werden kann.

Besonders günstig ist es dabei, wenn der Bogensegmentkörper in der Aufnahme sitzt und somit durch die Aufnahme innerhalb des Anschlussgehäuses fixiert ist.

Insbesondere dann, wenn der Bogensegmentkörper als elastisch deformierbarer Körper ausgebildet ist ist es vorteilhaft, wenn der Bogensegmentkörper durch radiale Selbstspreizung relativ zur Mittelachse des Einsteckkanals in der Aufnahme fixiert ist, so dass insbesondere die radiale Selbstspreizung dazu führt, dass der Bogensegmentkörper dauerhaft in der Aufnahme verbleibt.

Hinsichtlich der Ausbildung des mindestens einen Einsteckkanals wurden bislang keine näheren Angaben gemacht.

Um jedoch zu verhindern, dass das Spitzende des Einzusteckenden Rohres das Intumeszenzmaterial berührt und/oder beschädigt und/oder verschiebt, ist vorzugsweise vorgesehen, dass der mindestens eine Einsteckkanal durch mindestens ein Anschlagelement für das Spitzende begrenzt ist, so dass das Einführen des Spitzendes in den Einsteckkanal einen Kontakt mit dem Intumeszenzmaterial verhindert.

Besonders günstig ist es, wenn das mindestens eine Anschlagelement auf einer dem Einsteckkanal zugewandten Seite der Aufnahme angeordnet ist.

Ferner ist es günstig, wenn das mindestens eine Anschlagelement eine Barriere zwischen dem Spitzende und dem Intumeszenzmaterial bildet, so dass dadurch ein Kontakt zwischen dem Intumeszenzmaterial und dem Spitzende verhindert werden kann.

Hinsichtlich der Ausbildung des Anschlagelements wären die unterschiedlichsten Möglichkeiten denkbar.

Besonders vorteilhaft ist es, wenn das Anschlagelement sich in Form eines Bogensegments um die Mittelachse des Einsteckkanals erstreckt.

Dabei kann sich das jeweilige Bogensegment über einen Winkelabstand von mindestens 20° oder mindestens 60° erstrecken.

Besonders günstig ist es jedoch, wenn das im Fall einer Heißgasströmung stromaufwärts des Intumeszenzmaterials angeordnete Anschlagelement sich über ein Bogensegment von weniger als 20°, noch besser weniger als 10° erstreckt, um es dem anströmenden heißen Gas zu ermöglichen, möglichst großflächig insbesondere auch stirnseitig mit dem Intumeszenzmaterial in Wechselwirkung zu treten.

Hinsichtlich der Ausbildung der mindestens einen Steckmuffe ist vorzugsweise vorgesehen, dass die mindestens eine Steckmuffe eine dem Einsteckkanal zugewandte und um die Mittelachse des Einsteckkanals geschlossen umlaufende Vertiefung aufweist, in welcher ein Dichtring angeordnet ist, der dazu dient, zwischen der Steckmuffe und dem einzusteckenden Spitzende eine dichte Verbindung herzustellen.

Besonders günstig ist es, wenn die Vertiefung eine sich parallel zu einer Einsteckrichtung des Spitzendes konisch erweiternde Wandfläche aufweist, an welcher der Dichtring anliegt.

Eine derartige sich parallel zur Einsteckrichtung konisch erweiternde Wandfläche wirkt zusammen mit der eingesetzten Dichtung im Sinne einer Sicherung des Spitzendes in der Steckmuffe gegen ein Herausziehen aus derselben.

Eine besonders vorteilhafte Lösung sieht dabei vor, dass der Dichtring einen in der Vertiefung sitzenden Ringkörper aufweist, der mit einer Außenfläche an der sich konisch erweiternden Wandfläche anliegt.

Ferner ist vorzugsweise vorgesehen, dass der Ringkörper an der Außenfläche mit mindestens einem um die Mittelachse des Einsteckkanals umlaufenden Dichtwulst versehen ist, welcher dazu beiträgt, eine möglichst linienförmige und somit dicht abschließende Abdichtung zwischen dem Dichtring und der jeweiligen Vertiefung herzustellen.

Zur weiteren vorteilhaften Abdichtung zwischen der Steckmuffe und dem Spitzende ist vorzugsweise vorgesehen, dass der Dichtring auf seiner dem Verbindungskanal zugewandten Seite einen an dem Spitzende anlegbaren Innenring und einen durch einen Zwischenraum von dem Innenring getrennten und an einer Bodenfläche der Vertiefung anliegenden Außenring aufweist.

Durch diese Ausbildung des Dichtrings lässt sich die Dichtwirkung zwischen der Steckmuffe und dem Spitzende noch dadurch verbessern, dass die Möglichkeit geschaffen werden kann, das von dem Brandschutzrohranschluss geführte unter Druck stehende Medium in den Zwischenraum eintreten zu lassen um somit den Innenring in radialer Richtung gegen das Spitzende zusätzlich zu beaufschlagen.

Vorzugsweise ist dabei der Zwischenraum dem Verbindungskanal zugewandt angeordnet.

Vorzugsweise ist ferner vorgesehen, dass der Innenring und der Außenring an den Ringkörper des Dichtrings angeformt sind und somit von diesem gehalten und positioniert sind.

Ferner ist vorzugsweise vorgesehen, dass der Dichtring mindestens eine an den Ringkörper angeformte, in Richtung des Einsteckkanals überstehende Dichtrippe aufweist.

Darüber hinaus lässt sich dieser Brandschutzrohranschluss besonders vorteilhaft dann einbauen, wenn das Anschlussgehäuse insbesondere an seiner Einbauseite, von einem Ring aus Intumeszenzmaterial umschlossen ist.

Das heißt, dass das Anschlussgehäuse auf seiner Einbauseite, das heißt seinen Mantelseiten, mit einem Ring aus Intumeszenzmaterial versehen ist, der dazu führt, dass selbst im Fall von einem nicht völlig gasdichten Einbau des Anschlussgehäuses das Intumeszenzmaterial im Brandfall aktiv wird und eventuelle Risse zwischen dem Anschlussgehäuse und dem umgebenden Gebäudeteil, beispielsweise einer Wand oder einer Decke, verschließt.

Der Brandschutzrohranschluss könnte Teil eines Formstücks, das heißt eines Schiebers oder eines anderen Elements sein.

Bei einer vorteilhaften Lösung ist vorgesehen, dass der Brandschutzrohranschluss entsprechend einem oder mehreren der vorstehenden Merkmale ausgebildet ist und dass das Anschlussgehäuse mit zwei Steckmuffen versehen ist, so dass zwischen den Einsteckkanälen der Steckmuffen mindestens ein Verbindungskanal angeordnet ist.

In diesem Fall lässt sich der Brandschutzrohranschluss vorzugsweise als Brandschutzrohrverbinder einsetzen.

Der erfindungsgemäße Mantel kann in unterschiedlichster Art und Weise realisiert sein.

Das erfindungsgemäße thermisch isolierende Material ist bereits dadurch schon vorteilhaft, dass es bei einer Aufheizung des Anschlusskörpers eine außenseitige Wärmeabfuhr bei dem Anschlussgehäuse verhindert, so dass dadurch eine möglichst rasche Aufblähung des Intumeszenzmaterials erfolgen kann.

Ferner ist vorzugsweise vorgesehen, dass der Mantelkörper aus einem Material hergestellt ist, das bei Temperaturen ab ungefähr 70° seine Form verliert. Noch besser ist es, wenn das Material bei ungefähr 60° C, noch besser ungefähr 70° C, seine Form verliert.

Unter einem derartigen Material ist dabei zu verstehen, dass dieses ab ungefähr 70° entweder durch Kollabieren oder durch Schmelzen oder andere Degradationsprozesse seine Form verliert und somit im Brandfall an der Stelle, an der der Mantelkörper vorhanden war, einen das Außengehäuse außenseitig umgebenden Luftraum schafft, der thermisch isolierend wirkt.

Darüber hinaus kann es von Vorteil sein, wenn der Mantelkörper aus einem thermisch zerfallenden Material ausgebildet ist, das heißt, dass der Mantel auch so ausgebildet sein kann, dass das Material ab einer Temperatur von ungefähr 70° seine Form dadurch verliert, dass es thermisch, beispielsweise durch einen Zersetzungsprozess, zerfällt.

Im Zusammenhang mit den bisherigen Ausführungsformen des erfindungsgemäßen Mantels wurden keine näheren Angaben zu der Anordnung desselben an dem Anschlussgehäuse gemacht.

So sieht eine vorteilhaft Lösung vor, dass der Mantel das Anschlussgehäuse zumindest in einem das im den Verbindungskanal begrenzende Intumeszenzmaterial aufnehmenden Bereich umschließt.

Ferner ist vorzugsweise vorgesehen, dass der Mantel das Anschlussgehäuse zumindest im Bereich eines zwischen den Steckmuffen liegenden Verbindungsabschnitts umschließt.

Um den Mantel so zu gestalten, dass er bei in Richtung des Brandschutzrohranschlusses aufsteigenden heißen Gasen einen möglichst umfassenden Entzug von Wärme aus dem Außengehäuse verhindert, ist vorzugsweise vorgesehen, dass der Mantel das Anschlussgehäuse im Bereich einer beim Einbau in Schwerkraftrichtung untenliegend angeordneten Steckmuffe umschließt, so dass das Anschlussgehäuse auch im Bereich der Steckmuffe, die den Rohrabschnitt aufnimmt, über welchen die heißen Gase dem Brandschutzrohranschluss zugeführt werden, gegen einen Wärmeentzug geschützt ist.

In der Zeichnung zeigen:
- Fig. 1: eine teilweise aufgeschnittene perspektivische Darstellung eines Ausführungsbeispiels eines Brandschutzrohranschlusses, welcher im dargestellten Fall zwei Steckmuffen aufweist und somit als Brandschutzbohrverbinder dient;
- Fig. 2: einen halbseitigen Schnitt durch den in Fig. 1 dargestellten Brandschutzrohranschluss;
- Fig. 3: einen Schnitt durch das erste Ausführungsbeispiel ähnlich Fig. 2 mit eingesteckten Spitzenden von Rohren;
- Fig. 4: eine Draufsicht auf den Brandschutzrohranschluss in Richtung des Pfeils A in Fig. 2;
- Fig. 5: eine Seitenansicht eines Ringkörpers aus Intumeszenzmaterial;
- Fig. 6: einen Schnitt längs Linie 6-6 in Fig. 5;
- Fig. 7: eine Darstellung des ersten Ausführungsbeispiels des Brandschutzrohranschlusses gemäß Fig. 3 bei aktiviertem Intumeszenzmaterial;
- Fig. 8: einen einseitigen Querschnitt durch einen Dichtring;
- Fig. 9: eine teilweise aufgeschnittene perspektivische Darstellung eines erfindungsgemäßen Brandschutzrohranschlusses;
- Fig. 10: einen halbseitigen Schnitt durch den in Fig. 9 dargestellten Brandschutzrohranschluss und
- Fig. 11: eine Draufsicht auf das zweite Ausführungsbeispiel des erfindungsgemäßen Brandschutzrohranschlusses in Richtung des Pfeils B in Fig. 10.

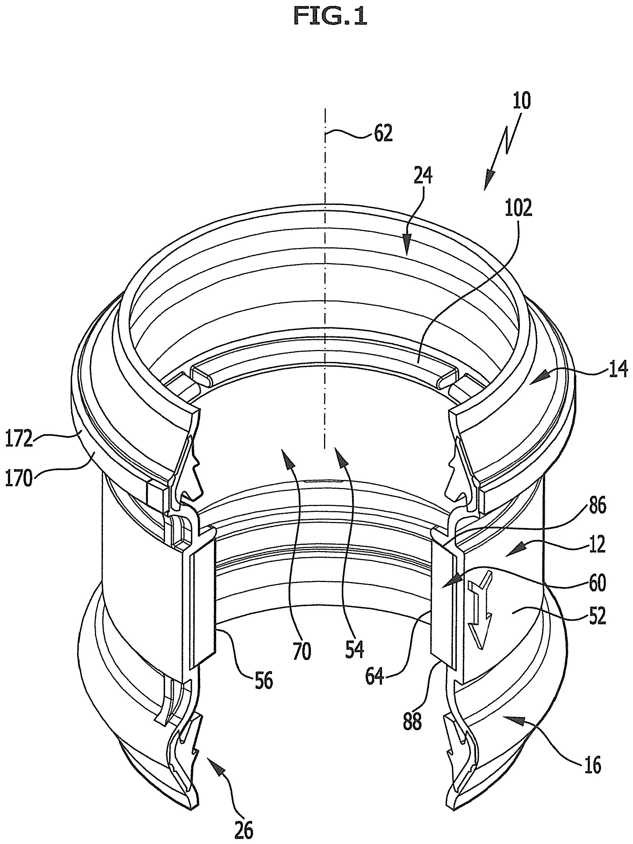

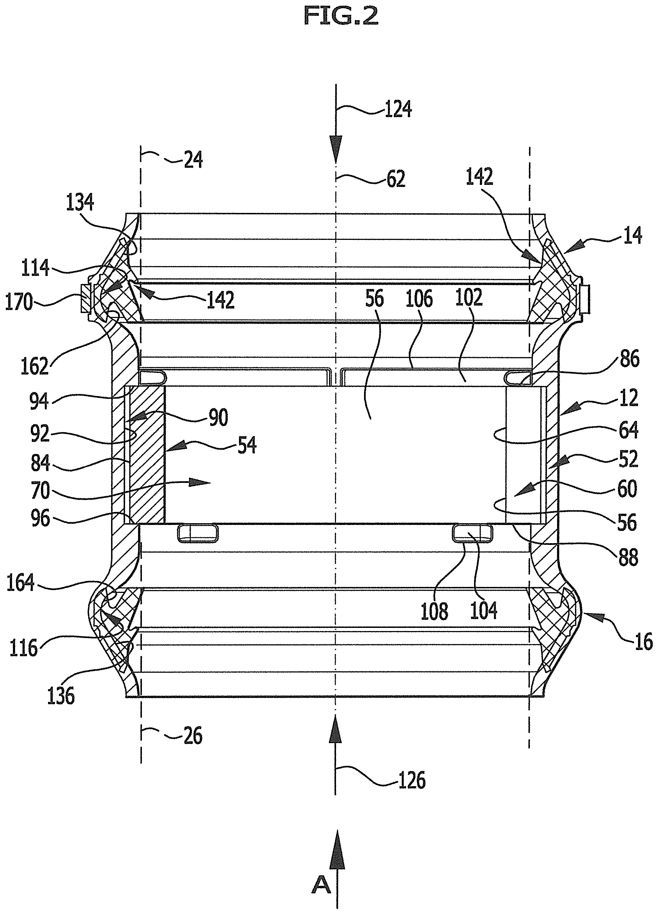

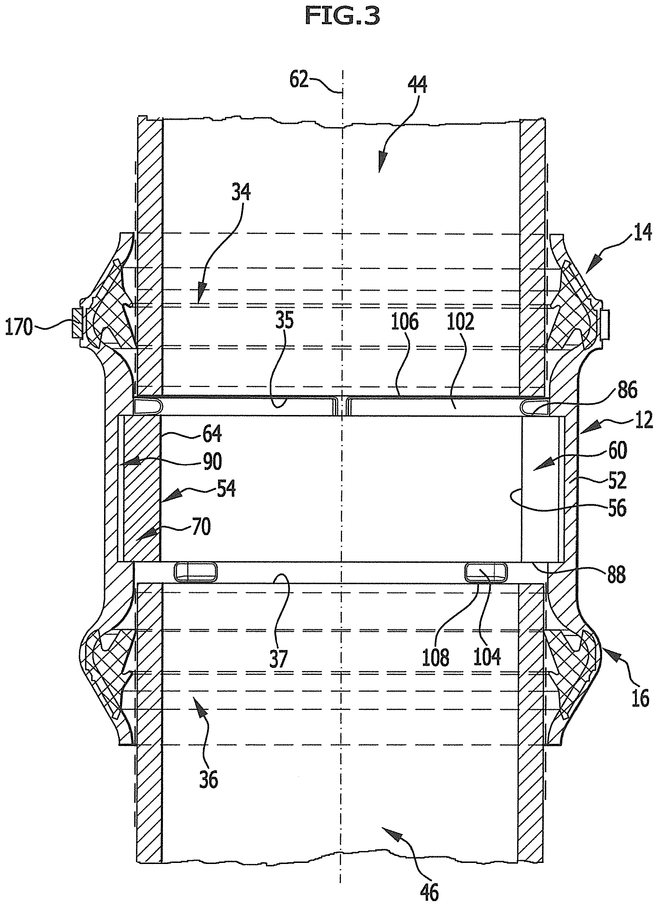

Ein in Fig. 1 und 2 dargestelltes Ausführungsbeispiel eines Brandschutzrohranschlusses 10 umfasst ein Anschlussgehäuse 12 aus Gusseisen, das beispielsweise mit einer ersten Steckmuffe 14 und einer zweiten Steckmuffe 16 versehen ist, wobei jede der Steckmuffen 14, 16 mit einem Einsteckkanal 24 beziehungsweise 26 versehen ist, in welche, wie in Fig. 3 dargestellt, ein Spitzende 34 beziehungsweise 36 eines Rohres 44 beziehungsweise 46 einsteckbar ist.

Das Anschlussgehäuse 12 umfasst ferner einen beispielsweise zwischen den Steckmuffen 14 und 16 angeordneten Verbindungsabschnitt 52, innerhalb von welchem ein Verbindungskanal 54 verläuft, welcher bei in die Steckmuffen 14, 16 eingesteckten Spitzenden 34, 36 eine Verbindung zwischen den Rohren 44 und 46 herstellt.

Der Verbindungskanal 54 wird jedoch nicht direkt durch den Verbindungsabschnitt 52 des Anschlussgehäuses 12 gebildet, sondern zumindest zum Teil von einer freiliegenden Oberfläche 56 eines innerhalb des Verbindungsabschnitts 52 des Anschlussgehäuses 12 angeordneten Intumeszenzmaterials 60, wobei die freiliegende Oberfläche 56 des Intumeszenzmaterials 60 im Wesentlichen durch eine zu einer Mittelachse 62 der Steckmuffen 14 und 16 und auch des Verbindungsabschnitts 52 verlaufende zylindrische Innenfläche 64 im Wesentlichen gebildet wird.

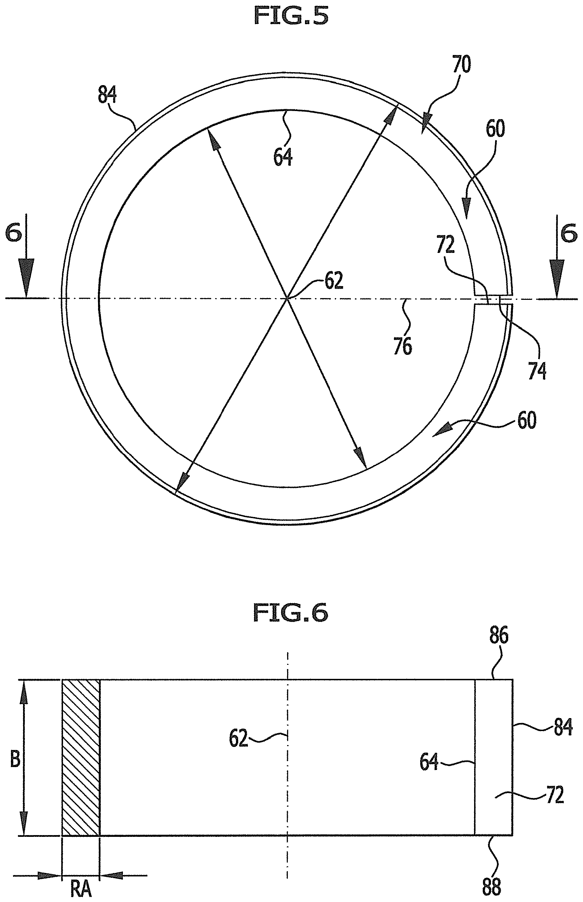

Wie in Fig. 5 und 6 dargestellt, ist das Intumeszenzmaterial 60 in dem Verbindungsabschnitt 52 des Anschlussgehäuses 12 in Form eines Ringkörpers 70 angeordnet, der, wie in Fig. 6 dargestellt, einen im Wesentlichen rechteckigen Querschnitt aufweist, dessen parallel zur Mittelachse 62 verlaufende Breite B ein Vielfaches seiner radialen Ausdehnung RA bezogen auf die Mittelachse 62 beträgt.

Vorzugsweise ist die Breite B mindestens das Vierfache der radialen Ausdehnung RA.

Ferner ist der Ringkörper 70 einseitig offen ausgebildet und weist einander zugewandte Endflächen 72 und 74 auf, wobei die Endflächen 72 und 74 schräg oder parallel zu einer durch die Mittelachse 62 hindurch verlaufenden Radialebene 76 verlaufen, allerdings im Abstand zu dieser, so dass zwischen den Endflächen 72 und 74 ein Zwischenraum verbleibt.

Der Ringkörper 70 aus dem Intumeszenzmaterial 60 weist zusätzlich zur zylindrisch zur Mittelachse 62 verlaufenden Innenfläche 64 eine zylindrisch zur Mittelachse 62 verlaufende Außenfläche 84 auf.

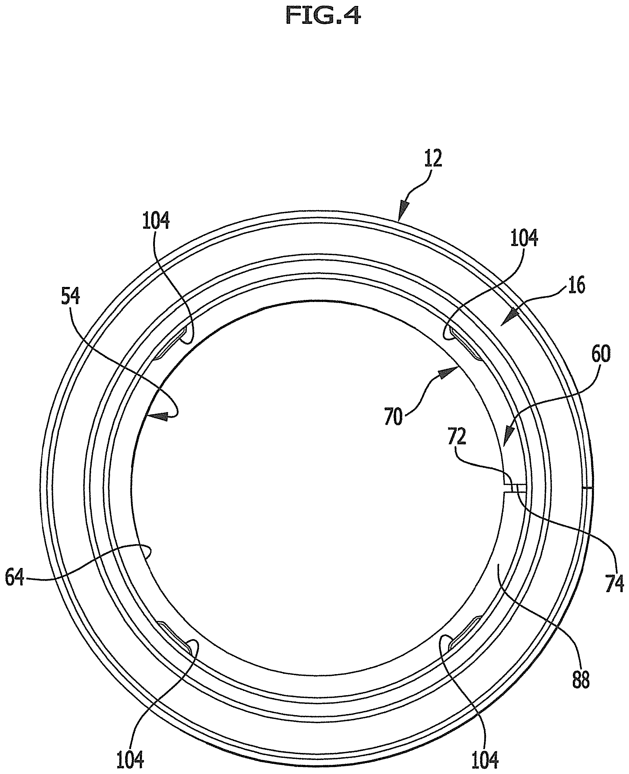

Der Ringkörper 70 aus dem Intumeszenzmaterial 60 sitzt, wie insbesondere in den Fig. 1 bis 4 dargestellt, an einer in den Verbindungsabschnitt 52 auf einer der Mittelachse 62 zugewandten Innenseite angeformten Aufnahme 90, welche eine Bodenfläche 92 aufweist, die ungefähr parallel zur Mittelachse 62, vorzugsweise zylindrisch zu dieser, verläuft, sowie quer zur Bodenfläche 92 verlaufende und in Richtung parallel zur Mittelachse 62 im Abstand von einander radial nach innen zur Mittelachse 62 hin verlaufende Seitenflächen 94 und 96 aufweist, die allerdings Stirnseiten 86 und 88 des Ringkörpers 70 in radialer Richtung zur Mittelachse 62 nicht vollständig übergreifen, sondern nur in einem radial außen liegenden Teilbereich, so dass ein radial innen liegender Teilbereich der Stirnseiten 86 und 88 über die Aufnahme 90 radial nach innen überstehend und im Wesentlichen frei liegend angeordnet ist und zur freiliegenden Oberfläche 56 beiträgt.

Beiderseits des in der Aufnahme 90 im Verbindungsabschnitt 52 sitzenden Ringkörpers 70 sind Anschlagelemente 102 und 104 vorgesehen, die ausgehend von dem Verbindungsabschnitt 52 des Anschlussgehäuses 12 radial nach innen überstehen und, wie in Fig. 3 dargestellt, mit den jeweiligen Einsteckkanälen 24 und 26 zugewandten Anschlagflächen 106 und 108 ein zu weites Einschieben der Spitzenden 34 beziehungsweise 36 der Rohre 44 beziehungsweise 46 verhindern, so dass die Spitzenden 34 beziehungsweise 36 maximal so weit in die Steckmuffen 14 beziehungsweise 16 einschiebbar sind, dass deren Stirnflächen 35 beziehungsweise 37 an den Anschlagflächen 106 beziehungsweise 108 der Anschlagelemente 102 beziehungsweise 104 anliegen.

Somit umfasst das Intumeszenzmaterial 60 als freiliegende Oberfläche 56 nicht nur die zylindrische Innenfläche 64, sondern radial innerhalb der Aufnahme 90 und von deren Seitenwänden 94 beziehungsweise 96 nicht überdeckte Bereiche der Stirnflächen 86 und 88 des Ringkörpers 70.

Der Ringkörper 70 aus dem Intumeszenzmaterial 60 ist vorzugsweise elastisch verformbar, so dass aufgrund der einander zugewandten offenen Endflächen 72, 74 derselben der Ringkörper durch radiale Verschiebung der Endflächen 72 und 74 relativ zueinander so verformt werden kann, dass dieser durch einen der Einsteckkanäle 24 beziehungsweise 26 in den Bereich innerhalb des Verbindungsabschnitts 52 einführbar und in die Aufnahme 90 einsetzbar ist, wobei der Ringkörper 70 dabei aufgrund der Eigenelastizität sich so weit spreizt, dass dieser mit seiner zylindrischen Außenfläche 84 an der Bodenfläche 92 der Aufnahme 90 zur Anlage kommt, und wobei der Ringkörper 70 sich radial so weit ausdehnen kann, dass die Endflächen 72, 74 im Abstand voneinander liegen.

Dabei besteht aufgrund der elastischen Eigenschaften des Ringkörpers 70 bereits die Möglichkeit, dass dieser sich aufgrund seiner Eigenelastizität radial so weit aufweitet, dass er fest in der Aufnahme 90 zwischen den Seitenwänden 94 und 96 sitzt und somit in Richtung der Mittelachse 62 nicht mehr verschiebbar ist.

Darüber hinaus tragen auch die Anschlagkörper 102 und 104 noch zur zusätzlichen Fixierung des Ringkörpers 70 gegen Bewegungen in Richtung parallel zur Mittelachse 62 bei.

Bei der beispielhaft in Fig. 3 dargestellten Einbausituation liegt das Spitzende 36 stromabwärts relativ zum Spitzende 34, wenn die Rohre 44 und 46 wie üblicherweise vorgesehen, Flüssigkeit, insbesondere Abwasser, führen.

Somit tritt die Flüssigkeit in Schwerkraftrichtung von dem Rohr 44 in das Rohr 46 über und umspült den Ringkörper im Bereich seiner zylindrischen Innenfläche 64 sowie auch teilweise im Bereich seiner Stirnflächen 86 beziehungsweise 88.

Bei einem Brandfall ist jedoch davon auszugehen, dass heiße Gase entgegengesetzt zur Schwerkraftrichtung in dem Rohr 46 aufsteigen und dabei vor Übertritt in das Rohr 44 das Intumeszenzmaterial 60 des Ringkörpers 70 beaufschlagen, und zwar im Bereich seiner freiliegenden Oberfläche 56, die neben der Innenfläche 64 des Ringkörpers zumindest noch einen radial innenliegenden Teilbereich der Stirnfläche 88 und gegebenenfalls noch einen radial innenliegenden Teilbereich der Stirnfläche 86 umfasst.

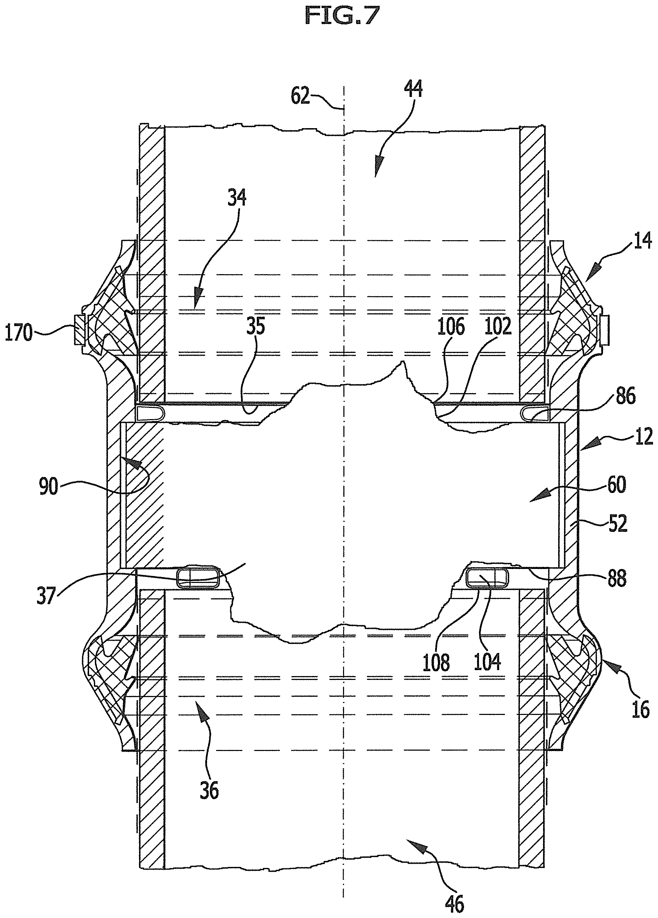

Durch den direkten Kontakt des Intumeszenzmaterials 60 im Ringkörper 70 erfolgt eine optimale Aufheizung des Intumeszenzmaterials 60 des Ringkörpers 70, so dass selbst bei einer Verbindung des Anschlussgehäuses 12 im Bereich des Verbindungsabschnitts 52 mit einem Gebäude, beispielsweise einer Gebäudedecke, eine Aufheizung des Intumeszenzmaterials 60 des Ringkörpers 70 allein über die innere freiliegende Oberfläche 56 des Intumeszenzmaterials 60 möglich ist und somit das Intumeszenzmaterial 60 - wie vorgesehen - sich aufgrund der Hitzeeinwirkung aufbläht und den Verbindungskanal 54 verschließt, wie in Fig. 7 dargestellt.

Zur Abdichtung zwischen den Steckmuffen 14 und 16 und dem jeweiligen Spitzende 34 beziehungsweise 36 umfasst jede der Steckmuffen 14 beziehungsweise 16 eine jeweils außerhalb des Einsteckkanals 24 beziehungsweise 26 liegende und geschlossen um die Mittelachse 62 umlaufende Vertiefung 114 beziehungsweise 116, wobei jede der Vertiefungen 114 beziehungsweise 116 eine sich parallel zur Einsteckrichtung 124 beziehungsweise 126 konisch erweiternde Wandfläche 134 beziehungsweise 136 aufweist.

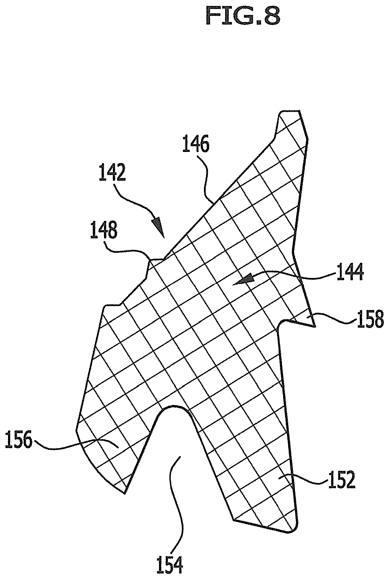

In der jeweiligen umlaufenden Vertiefung 114 beziehungsweise 116 sitzt jeweils ein Dichtring 142, welcher, wie in Fig. 8 dargestellt, einen Ringkörper 144 aufweist, der eine radial außen liegende Außenfläche 146 bildet, an welcher mindestens ein Dichtwulst 148 angeordnet ist, wobei die radial außen liegende Außenfläche 146 jeweils an der sich konisch erweiternden Wandfläche 134 beziehungsweise 136 anliegt, so dass der Dichtwulst 148 eine Dichtlinie mit der Wandfläche 134 beziehungsweise 136 bildet.

Ferner weist der Dichtring 142 jeweils auf seiner dem Verbindungskanal 54 zugewandten Seite ein an dem Spitzende 34 beziehungsweise 36 des jeweiligen Rohres 44 beziehungsweise 46 anlegbaren Innenring 152 auf, der durch einen radial außerhalb des Innenrings 152 liegenden ringförmigen Zwischenraum 154 von einem Außenring 156 getrennt ist, wobei der Außenring 156 ebenfalls so ausgebildet ist, dass er sich an einer Bodenfläche 162 beziehungsweise 164 der jeweiligen Vertiefung 134 beziehungsweise 136 abstützen kann.

Durch den Zwischenraum 154 ist der Innenring 152 radial zur Mittelachse 62 aufweitbar und somit kann der Innenring 152 derart gefertigt werden, dass dieser mit radialer Krafteinwirkung an dem jeweiligen Spitzende 34 beziehungsweise 36 des jeweiligen Rohres 44 beziehungsweise 46 anlegbar ist.

Dabei ist der Zwischenraum 154 jeweils dem Verbindungskanal 54 zugewandt angeordnet, so dass ein im Bereich des Verbindungskanals 54 vorliegendes Medium, wenn dieses unter Druck steht, in den Zwischenraum 154 eindringt und den Innenring 152 zusätzlich noch in Richtung des jeweiligen Spitzendes 34 beziehungsweise 36 radial nach innen beaufschlagt.

Bei der Dichtung 142 sind sowohl der Innenring 152 als auch der Außenring 156 an den Ringkörper 144 einstückig angeformt.

Ferner ist noch zur zusätzlichen Abdichtung zwischen dem Ringkörper 144 und dem jeweiligen Spitzende 34 beziehungsweise 36 des jeweiligen Rohrs 44 beziehungsweise 46 noch eine überstehende Dichtrippe 158 vorgesehen, welche elastisch deformierbar ist und somit vorzugsweise ebenfalls eine linienförmige Abdichtung zwischen dem Dichtring 142 und dem jeweiligen Spitzende 34 beziehungsweise 36 bewirkt.

Durch die konische Ausbildung der Wandfläche 134 beziehungsweise 136 der jeweiligen Vertiefung 114 beziehungsweise 116 bewirkt ein Zug auf die jeweiligen Spitzenden 34 beziehungsweise 36, der in umgekehrter Richtung zur Einsteckrichtung 124 beziehungsweise 126 wirkt, ein Verkeilen des Ringkörpers 144 zwischen der konischen Wandfläche 134 beziehungsweise 136 und dem jeweiligen Spitzende 34 beziehungsweise 36, so dass dadurch eine Sicherung des jeweiligen Spitzendes 34 beziehungsweise 36 gegen ein Herausziehen desselben entgegengesetzt zur Einsteckrichtung 124 beziehungsweise 126 bewirkt wird.

Um beim Einbau des Brandschutzrohranschlusses 10 außen am Brandschutzrohranschluss 10, das heißt zwischen diesem und einem Element eines Baukörpers, beispielsweise einer Wand oder einer Decke, den Durchtritt von heißen Gasen zu verhindern, ist vorzugsweise das Anschlussgehäuse 12, beispielsweise im Bereich einer der Steckmuffen 14 oder 16, mit einem Ring 170 aus Intumeszenzmaterial versehen, wobei der Ring 170 beispielsweise durch ein Band 172 aus Intumeszenzmaterial gebildet ist, welches das Anschlussgehäuse 12 beispielsweise im Bereich der Steckmuffe 14 umschließend an dem Anschlussgehäuse 12, vorzugsweise durch eine stoffschlüssige Verbindung, gehalten ist.

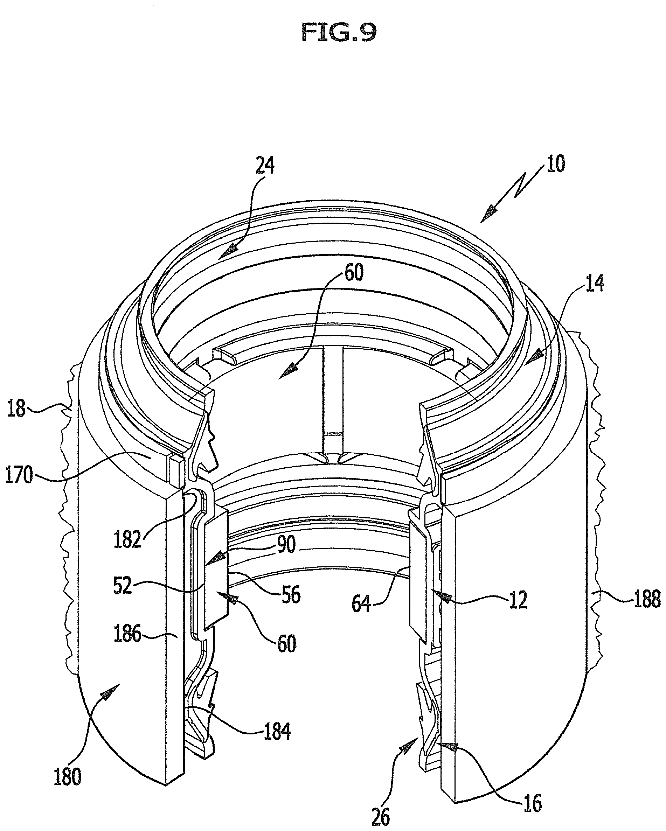

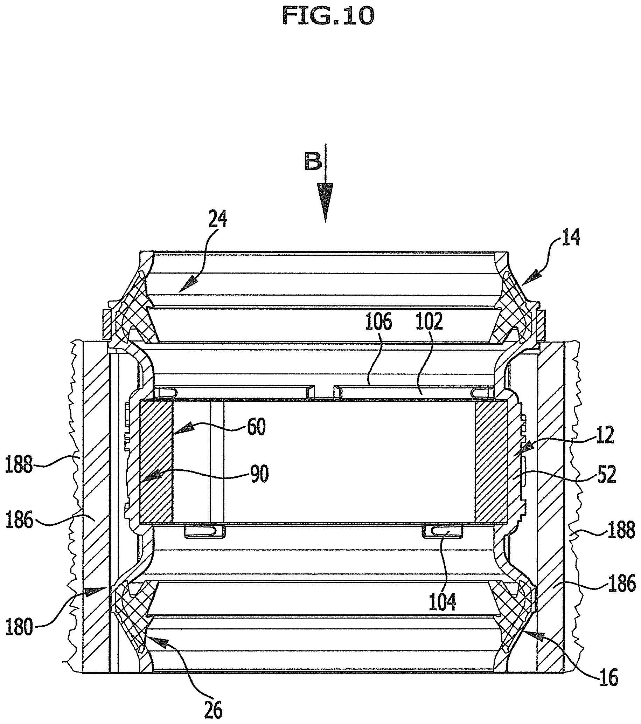

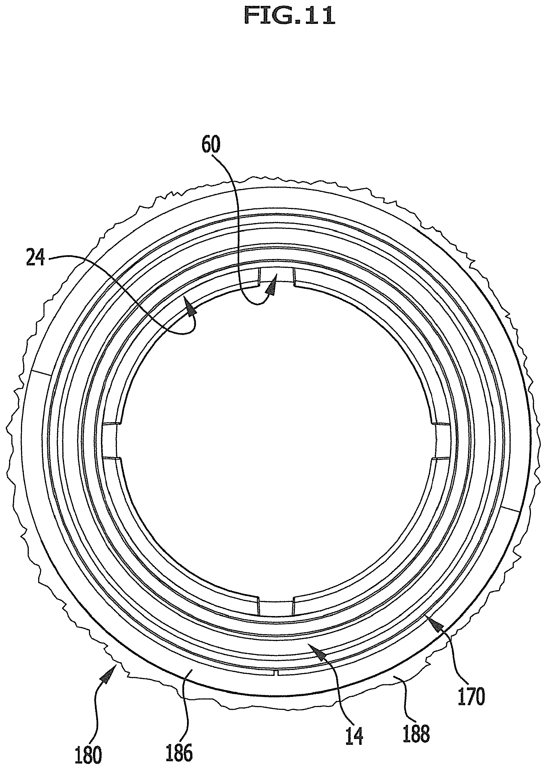

Bei dem erfindungsgemäßen Ausführungsbeispiel, dargestellt in Fig. 9 bis 11, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel das aus Gusseisen hergestellte Anschlussgehäuse 12, insbesondere im Bereich zwischen der Steckmuffe 14 und der Steckmuffe 16 von einem Mantel 180 umschlossen, welcher beim Einbau des Brandschutzrohranschlusses 10 das Anschlussgehäuse 12 thermisch von dem den Brandschutzrohranschluss 10 aufnehmenden Gebäudebereich, insbesondere von der den Brandschutzrohranschluss 10 aufnehmenden Gebäudedecke, trennt, um in möglichst kurzer Zeit eine möglichst optimales Aufblähen des Intumeszenzmaterials 60 zu erreichen, wenn - wie im Zusammenhang mit dem ersten Ausführungsbeispiel beschrieben - heiße Gase in dem Rohr 46 aufsteigen und auf das Intumeszenzmaterial 60 einwirken. Dabei verhindert der Mantel 180 die Ableitung von Wärme aus dem Anschlussgehäuse 12 zu dem Gebäudebereich, insbesondere zu der Gebäudedecke.

Diese thermische Abkopplung des Anschlussgehäuses 12 kann der Mantel 180 durch eine thermisch isolierende Wirkung erreichen, die zusätzlich noch gegebenenfalls dadurch gesteigert werden kann, dass sich der Mantel 180 bei ansteigenden Temperaturen auflöst, insbesondere abschmilzt, und somit einen Luftspalt zwischen dem Anschlussgehäuse 12 und dem dieses aufnehmenden Gebäudebereich schafft.

Der Mantel 180 weist einen Mantelkörper 186 auf, der aus dem thermisch isolierenden und auch bei thermischer Einwirkung seine Form verlierenden, insbesondere thermisch abschmelzenden, Material hergestellt ist, wobei der Mantelkörper 186 vorzugsweise noch durch eine Schallschutzfolie 188 umschlossen ist, die auf einer dem Außengehäuse 12 abgewandten Seite des Mantelkörpers 186 diesen umschließt und beim Einbau des erfindungsgemäßen Brandschutzrohrverbinders 10 an dem Gebäudebereich anliegt und somit eine Schalldämmung zwischen dem Gebäudebereich und dem Brandschutzrohrverbinder 10 bewirkt.

Beispielsweise kann das Material des Mantelkörpers 186 bei Temperaturen von ungefähr 70° C beginnend, noch besser von ungefähr 60° C beginnend, vorzugsweise bei Temperaturen von ungefähr 50° C beginnend, seine Struktur verlieren und beispielsweise abschmelzen, um den besagten Luftspalt zwischen dem Gehäuse 12 und dem Gebäudebereich zu schaffen.

Ein in diesem Zusammenhang für den Mantel 180 bevorzugtes Material ist Styropor, welches einerseits bei niedrigen Temperaturen bereits eine gute thermische Isolierung zwischen dem Anschlussgehäuse 12 und dem Gebäudebereich schafft und bei ansteigenden Temperaturen, beispielsweise spätestens ab 70° C zu schmelzen beginnt und somit einen Luftspalt zwischen dem Gebäudebereich und dem Gehäuse 12 schafft, der eine vollständige thermische Abkopplung des Gehäuses 12 von dem Gebäudebereich bewirkt.

Insbesondere ist der Mantel 180 so ausgebildet, dass er sich mit einem ersten Stützabschnitt 182 im Bereich der Steckmuffe 14 abstützt und mit einem zweiten Abstützbereich 184 im Bereich der Steckmuffe 16 an dem Gehäuse 12 abstützt.

Ferner ist auch bei diesem Ausführungsbeispiel nach wie vor der Ring 170 aus Intumeszenzmaterial vorgesehen, der einen Spalt zwischen dem Gebäudebereich und dem Gehäuse 12, insbesondere bei thermisch zerfallendem Mantel 180 im Brandfall verschließt.

## Patentansprüche

1. Brandschutzrohranschluss (10), umfassend ein Anschlussgehäuse (12) aus Gusseisen, das mit mindestens einer einen Einsteckkanal (24, 26) aufweisenden Steckmuffe (14, 16) zum Einstecken eines Spitzendes (34, 36) eines Rohres (44, 46), insbesondere eines Rohres aus Gusseisen, versehen ist, und ein in dem Anschlussgehäuse (12) angeordnetes Intumeszenzmaterial (60),
**dadurch gekennzeichnet, dass** das Anschlussgehäuse (12) außenseitig von einem Mantel (180) umschlossen ist, dessen Material im Brandfall eine außenseitige Abkühlung des Anschlussgehäuses (12) verhindert, dass der Mantel (180) einen Mantelkörper (186) aus einem thermisch isolierenden Material umfasst und dass der Mantel (180) das Anschlussgehäuse (12) zumindest in einem das den Verbindungskanal (54) begrenzende Intumeszenzmaterial (60) aufnehmenden Bereich (90) umschließt.

2. Brandschutzrohranschluss nach Anspruch 1, **dadurch gekennzeichnet, dass** in dem Anschlussgehäuse (12) auf den mindestens einen Einsteckkanal (24, 26) folgend ein Verbindungskanal (54) ausgebildet ist, und dass der Verbindungskanal (54) durch eine an diesen unmittelbar angrenzende freiliegende Oberfläche (56) des Intumeszenzmaterials (60) begrenzt ist.

3. Brandschutzrohranschluss nach Anspruch 2, **dadurch gekennzeichnet, dass** die freiliegende Oberfläche (56) durch eine Innenfläche (64) mindestens eines Bogensegmentkörpers (70) aus Intumeszenzmaterial (50) gebildet ist, dass insbesondere der Bogensegmentkörper die Form eines einseitig offenen Ringkörpers (70) aufweist, dass insbesondere der Bogensegmentkörper (70) eine Dicke in radialer Richtung zu einer Mittelachse (62) des Einsteckkanals (24, 26) aufweist, die mindestens ein Viertel der parallel zu der Mittelachse (62) des Einsteckkanals (24, 26) verlaufenden Breite des Bogensegmentkörpers (70) beträgt, dass insbesondere der Bogensegmentkörper (70) in radialer Richtung zur Mittelachse (62) des Einsteckkanals (24, 26) federnd ausgebildet ist.

4. Brandschutzrohranschluss nach Anspruch 3, **dadurch gekennzeichnet, dass** das Anschlussgehäuse (12) eine zum Verbindungskanal (54) hin offene Aufnahme (90) für das Intumeszenzmaterial (60) aufweist, dass insbesondere der Bogensegmentkörper (70) aus Intumeszenzmaterial in der Aufnahme (60) sitzt, dass insbesondere der Bogensegmentkörper (70) durch radiale Selbstspreizung relativ zur Mittelachse (62) des Einsteckkanals (24, 26) in der Aufnahme (90) fixiert ist.

5. Brandschutzrohranschluss nach einem der Ansprüche 2 bis 4, **dadurch gekennzeichnet, dass** der mindestens eine Einsteckkanal (24, 26) durch mindestens ein Anschlagelement (102, 104) für das Spitzende (34, 36) begrenzt ist, dass insbesondere das mindestens eine Anschlagelement (102, 104) auf einer dem Einsteckkanal (24, 26) zugewandten Seite der Aufnahme (90) angeordnet ist, dass insbesondere das mindestens eine Anschlagelement (102, 104) eine Barriere zwischen dem Spitzende (34, 36) und dem Intumeszenzmaterial (50) bildet, dass insbesondere das mindestens eine Anschlagelement (102, 104) sich in Form eines Bogensegments um die Mittelachse (62) des Einsteckkanals (24, 26) erstreckt.

6. Brandschutzrohranschluss nach einem der Ansprüche 2 bis 4, **dadurch gekennzeichnet, dass** die mindestens eine Steckmuffe (14, 16) eine dem Einsteckkanal (24, 26) zugewandte und um die Mittelachse (62) des Einsteckkanals (24, 26) geschlossen umlaufende Vertiefung (114, 116) aufweist, in welcher ein Dichtring (142) angeordnet ist, dass insbesondere die Vertiefung (114, 116) eine sich parallel zu einer Einsteckrichtung des Spitzendes (34, 36) konisch erweiternde Wandfläche (134, 136) aufweist, an welcher der Dichtring (142) anliegt, dass insbesondere der Dichtring (142) einen in der Vertiefung (114, 116) sitzenden Ringkörper (144) aufweist, der mit einer Außenfläche (146) an der sich konisch erweiternden Wandfläche (134, 136) anliegt, dass insbesondere der Ringkörper (144) an der Außenfläche (146) mit mindestens einem um die Mittelachse (62) des Einsteckkanals (24, 26) umlaufenden Dichtwulst (148) versehen ist.

7. Brandschutzrohranschluss nach Anspruch 5, **dadurch gekennzeichnet, dass** der Dichtring (142) auf seiner dem Verbindungskanal (54) zugewandten Seite einen an dem Spitzende (34, 36) anlegbaren Innenring (152) und einen durch einen Zwischenraum (154) von dem Innenring (152) getrennten und an einer Bodenfläche der Vertiefung (114, 116) anliegenden Außenring (156) aufweist, dass insbesondere der Zwischenraum (154) dem Verbindungskanal (54) zugewandt angeordnet ist, dass insbesondere der Innenring (152) und der Außenring (156) an den Ringkörper (144) angeformt sind, dass insbesondere der Dichtring (142) mindestens eine an den Ringkörper (144) angeformte, in Richtung des Einsteckkanals (24, 26) überstehende Dichtrippe aufweist.

8. Brandschutzrohranschluss nach einem der Ansprüche 2 bis 7, **dadurch gekennzeichnet, dass** das Anschlussgehäuse (12) von einem Ring (160) aus Intumeszenzmaterial umschlossen ist.

9. Brandschutzrohranschluss nach einem der Ansprüche 2 bis 7, **dadurch gekennzeichnet, dass** das Anschlussgehäuse (12) mit zwei Steckmuffen (14, 16) versehen ist und mindestens einen zwischen den Einsteckkanälen (24, 26) angeordneten Verbindungskanal (54) aufweist.

10. Brandschutzrohranschluss nach einem der voranstehenden Ansprüche, **dadurch gekennzeichnet, dass** der Mantelkörper (186) aus einem Material hergestellt ist, das bei Temperaturen spätestens ab ungefähr 70° C seine Form verliert.

11. Brandschutzrohranschluss nach einem der voranstehenden Ansprüche, **dadurch gekennzeichnet, dass** der Mantelkörper (186) aus einem thermisch zerfallenden Material ausgebildet ist.

12. Brandschutzrohranschluss nach einem der voranstehenden Ansprüche, **dadurch gekennzeichnet, dass** der Mantel (180) das Anschlussgehäuse (12) zumindest im Bereich eines zwischen den Steckmuffen (14, 16) liegenden Verbindungsabschnitts (52) umschließt.

13. Brandschutzrohranschluss nach einem der voranstehenden Ansprüche, **dadurch gekennzeichnet, dass** der Mantel (180) das Anschlussgehäuse (12) im Bereich einer beim Einbau in Schwerkraftrichtung untenliegend angeordneten Steckmuffe (16) umschließt.

## Claims

1. Fire protection pipe connection (10) comprising a connection housing (12) which is made of cast iron and which is provided with at least one plug-in sleeve (14, 16) which has an insertion channel (24, 26) for inserting a tip end (34, 36) of a pipe (44, 46), in particular a pipe made of cast iron, and an intumescent material (60) which is arranged in the connection housing (12), **characterised in that** the connection housing (12) is surrounded at the outer side by a cover (180) whose material in the event of a fire prevents external cooling of the connection housing (12), **in that** the cover (180) comprises a covering member (186) made of thermally insulating material and **in that** the cover (180) surrounds the connection housing (12) at least in a region (90) which receives the intumescent material (60) which delimits the connection channel (54).

2. Fire protection pipe connection according to claim 1, **characterised in that** in the connection housing (12) following the at least one insertion channel (24, 26) a connection channel (54) is formed, and **in that** the connection channel (54) is delimited by an exposed surface (56), which is directly adjacent thereto, of the intumescent material (60) .

3. Fire protection pipe connection according to claim 2, **characterised in that** the exposed surface (56) is formed by an inner face (64) of at least one curved segment member (70) made of intumescent material (50), **in that** in particular the curved segment member is in the form of an annular member (70) which is open at one side, **in that** in particular the curved segment member (70) has a thickness, in a radial direction with respect to a centre axis (62) of the insertion channel (24, 26), which is at least a quarter of the width of the curved segment member (70) which extends parallel with the centre axis (62) of the insertion channel (24, 26), **in that** in particular the curved segment member (70) is constructed to be resilient in a radial direction with respect to the centre axis (62) of the insertion channel (24, 26).

4. Fire protection pipe connection according to claim 3, **characterised in that** the connection housing (12) has a receiving member (90), which is open in the direction towards the connection channel (54), for the intumescent material (60), **in that** in particular the curved segment member (70) made of intumescent material is located in the receiving member (60), **in that** in particular the curved segment member (70) is fixed in the receiving member (90) by means of radial self-expansion relative to the centre axis (62) of the insertion channel (24, 26).

5. Fire protection pipe connection according to any one of claims 2 to 4, **characterised in that** the at least one insertion channel (24, 26) is delimited by at least one stop element (102, 104) for the tip end (34, 36), **in that** in particular the at least one stop element (102, 104) is arranged at a side, facing the insertion channel (24, 26), of the receiving member (90), **in that** in particular the at least one stop element (102, 104) forms a barrier between the tip end (34, 36) and the intumescent material (50), **in that** in particular the at least one stop element (102, 104) extends in the form of a curved segment about the centre axis (62) of the insertion channel (24, 26).

6. Fire protection pipe connection according to any one of claims 2 to 4, **characterised in that** the at least one plug-in sleeve (14, 16) has a recess (114, 116) which faces the insertion channel (24, 26) and which extends around the centre axis (62) of the insertion channel (24, 26) in a closed manner and in which a sealing ring (142) is arranged, **in that** in particular the recess (114, 116) has a wall face (134, 136) which expands in a conical manner parallel with an insertion direction of the tip end (34, 36) and against which the sealing ring (142) abuts, **in that** in particular the sealing ring (142) has an annular member (144) which is located in the recess (114, 116) and which is in abutment with an outer face (146) against the conically expanding wall face (134, 136), **in that** in particular the annular member (144) is provided on the outer face (146) with at least one sealing bead (148) which extends around the centre axis (62) of the insertion channel (24, 26).

7. Fire protection pipe connection according to claim 5, **characterised in that** the sealing ring (142) has at the side thereof facing the connection channel (54) an inner ring (152) which can be placed against the tip end (34, 36) and an outer ring (156) which is separated by an intermediate space (154) from the inner ring (152) and which is in abutment with a base face of the recess (114, 116), **in that** in particular the intermediate space (154) is arranged facing the connection channel (54), **in that** in particular the inner ring (152) and the outer ring (156) are formed on the annular member (144), **in that** in particular the sealing ring (142) has at least one sealing rib which is formed on the annular member (144) and which protrudes in the direction of the insertion channel (24, 26) .

8. Fire protection pipe connection according to any one of claims 2 to 7, **characterised in that** the connection housing (12) is surrounded by a ring (160) made of intumescent material.

9. Fire protection pipe connection according to any one of claims 2 to 7, **characterised in that** the connection housing (12) is provided with two plug-in sleeves (14, 16) and has at least one connection channel (54) which is arranged between the insertion channels (24, 26).

10. Fire protection pipe connection according to any one of the preceding claims, **characterised in that** the covering member (186) is produced from a material which loses its shape at temperatures at the latest from approximately 70°C.

11. Fire protection pipe connection according to any one of the preceding claims, **characterised in that** the covering member (186) is made from a thermally decaying material.

12. Fire protection pipe connection according to any one of the preceding claims, **characterised in that** the cover (180) surrounds the connection housing (12) at least in the region of a connection portion (52) located between the plug-in sleeves (14, 16).

13. Fire protection pipe connection according to any one of the preceding claims, **characterised in that** the cover (180) surrounds the connection housing (12) in the region of a plug-in sleeve (16) which is arranged during installation at the bottom in the direction of gravitational force.

## Revendications

1. Raccordement de tuyau sécurisé contre l'incendie (10) comprenant un boîtier de raccordement (12) en fonte, qui est muni d'au moins un manchon d'enfichage (14, 16) comprenant un canal d'enfichage (24, 26) pour l'enfichage d'une extrémité pointue (34, 36) d'un tuyau (44, 46), plus particulièrement d'un tuyau en fonte, et un matériau intumescent (60) disposé dans le boîtier de raccordement (12), **caractérisé en ce que** le boîtier de raccordement (12) est entouré, à l'extérieur, d'une enveloppe (180) dont le matériau empêche, lors d'un incendie, un refroidissement externe du boîtier de raccordement (12), **en ce que** l'enveloppe (180) comprend un corps d'enveloppe (186) constitué d'un matériau thermo-isolant et **en ce que** l'enveloppe (180) entoure le boîtier de raccordement (12) au moins dans une zone (90) logeant le matériau intumescent (60) limitant le canal de liaison (54).

2. Raccordement de tuyau sécurisé contre l'incendie selon la revendication 1, **caractérisé en ce que**, dans le boîtier de raccordement (12), à la suite de l'au moins un canal d'enfichage (24, 26), est réalisé un canal de liaison (54) et **en ce que** le canal de liaison (54) est limité par une surface libre (56) du matériau intumescent (60), immédiatement adjacente à celui-ci.

3. Raccordement de tuyau sécurisé contre l'incendie selon la revendication 2, **caractérisé en ce que** la surface libre (56) est constituée d'une surface interne (64) d'au moins un corps de segment courbe (70) en matériau intumescent (50), **en ce que**, plus particulièrement, le corps de segment courbe présente la forme d'un corps annulaire (70) ouvert sur un côté, **en ce que**, plus particulièrement, le corps de segment courbe (70) présente une épaisseur dans la direction radiale vers un axe central (62) du canal d'enfichage (24, 26) qui représente au moins un quart de la largeur du corps de segment courbe (70) qui s'étend parallèlement à l'axe central (62) du canal d'enfichage (24, 26), **en ce que**, plus particulièrement, le corps de segment courbe (70) est conçu de manière élastique dans la direction radiale vers l'axe central (62) du canal d'enfichage (24, 26).

4. Raccordement de tuyau sécurisé contre l'incendie selon la revendication 3, **caractérisé en ce que** le boîtier de raccordement (12) comprend un logement (90) pour le matériau intumescent (60), ouvert vers le canal de liaison (54), **en ce que**, plus particulièrement, le corps de segment courbe (70) en matériau intumescent est posé dans le logement (60), **en ce que**, plus particulièrement, le corps de segment courbe (70) est fixé dans le logement (90), grâce à un auto-écartement radial, par rapport à l'axe central (62) du canal d'enfichage (24, 26).

5. Raccordement de tuyau sécurisé contre l'incendie selon l'une des revendications 2 à 4, **caractérisé en ce que** l'au moins un canal d'enfichage (24, 26) est limité par au moins un élément de butée (102, 104) pour l'extrémité pointue (34, 36), **en ce que**, plus particulièrement, l'au moins un élément de butée (102, 104) est disposé sur un côté du logement (90) orienté vers le canal d'enfichage (24, 26), **en ce que**, plus particulièrement l'au moins un élément de butée (102, 104) constitue une barrière entre l'extrémité pointue (34, 36) et le matériau intumescent (50), **en ce que**, plus particulièrement, l'au moins un élément de butée (102, 104) s'étend sous la forme d'un segment courbe autour de l'axe central (62) du canal d'enfichage (24, 26).

6. Raccordement de tuyau sécurisé contre l'incendie selon l'une des revendications 2 à 4, **caractérisé en ce que** l'au moins un manchon d'enfichage (14, 16) comprend un renfoncement (114, 116) orienté vers le canal d'enfichage (24, 26) et entourant de manière fermée l'axe central (62) du canal d'enfichage (24, 26), dans lequel une bague d'étanchéité (142), est disposée, **en ce que**, plus particulièrement, le renfoncement (114, 16) comprend une surface de paroi (134, 136) s'élargissant de manière conique parallèlement à une direction d'enfichage de l'extrémité pointue (34, 36), contre laquelle la bague d'étanchéité (142) s'appuie, **en ce que**, plus particulièrement, la bague d'étanchéité (142) comprend un corps annulaire (144) posé dans le renfoncement (114, 116), qui s'appuie avec une surface externe (146) contre la surface de paroi (134, 136) s'élargissant de manière conique, **en ce que**, plus particulièrement, le corps annulaire (144) est muni, au niveau de la surface externe (146), d'au moins un bourrelet d'étanchéité (148) entourant l'axe central (62) du canal d'enfichage (24, 26).

7. Raccordement de tuyau sécurisé contre l'incendie selon la revendication 5, **caractérisé en ce que** la bague d'étanchéité (142) comprend, sur son côté orienté vers le canal de liaison (54), un anneau interne (152) pouvant s'appuyer contre l'extrémité pointue (34, 36) et un anneau externe (156) séparé de l'anneau interne (152) par un espace intermédiaire (154) et s'appuyant contre une surface de fond du renfoncement (114, 116), **en ce que**, plus particulièrement, l'espace intermédiaire (154) est orienté vers le canal de liaison (54), **en ce que**, plus particulièrement, l'anneau interne (152) et l'anneau externe (156) sont formés sur le corps annulaire (144), **en ce que**, plus particulièrement, la bague d'étanchéité (142) comprend au moins une nervure d'étanchéité formée sur le corps annulaire (144) et dépassant en direction du canal d'enfichage (24, 26).

8. Raccordement de tuyau sécurisé contre l'incendie selon l'une des revendications 2 à 7, **caractérisé en ce que** le boîtier de raccordement (12) est entouré par une bague (160) en matériau intumescent.

9. Raccordement de tuyau sécurisé contre l'incendie selon l'une des revendications 2 à 7, **caractérisé en ce que** le boîtier de raccordement (12) est muni de deux manchons d'enfichage (14, 16) et comprend au moins un canal de liaison (54) disposé entre les canaux d'enfichage (24, 26).

10. Raccordement de tuyau sécurisé contre l'incendie selon l'une des revendications précédentes, **caractérisé en ce que** le corps d'enveloppe (186) est constitué d'un matériau qui perd sa forme au plus tard à des températures à partir d'environ 70 °C.

11. Raccordement de tuyau sécurisé contre l'incendie selon l'une des revendications précédentes, **caractérisé en ce que** le corps d'enveloppe (186) est constitué d'un matériau décomposable thermiquement.

12. Raccordement de tuyau sécurisé contre l'incendie selon l'une des revendications précédentes, **caractérisé en ce que** l'enveloppe (180) entoure le boîtier de raccordement (12) au moins au niveau d'une portion de liaison (52) se trouvant entre les manchons d'enfichage (14, 16).

13. Raccordement de tuyau sécurisé contre l'incendie selon l'une des revendications précédentes, **caractérisé en ce que** l'enveloppe (180) entoure le boîtier de raccordement (12) au niveau d'un manchon d'enfichage (16) disposé en bas lors du montage dans la direction de la force de gravité.
